# EUROPEAN PATENT SPECIFICATION

(11) **EP 3 416 989 B1**
(45) Date of publication and mention of the grant of the patent: **12.06.2019**
(21) Application number: 17704028.4
(22) Date of filing: 14.02.2017
(51) Int. Cl.: C08F 6/00, B01J 8/00, B01J 8/18, B01J 8/26, B01J 8/36

(54) **PROCESS FOR THE PREPARATION OF A DRIED POWDER**
VERFAHREN ZUR HERSTELLUNG EINES GETROCKNETEN PULVERS
PROCÉDÉ DE PRÉPARATION DE POUDRE SÈCHE

(30) Priority: 15.02.2016 EP 16155648
(43) Date of publication of application: 26.12.2018
(73) Proprietor: Basell Polyolefine GmbH, 50389 Wesseling (DE)
(72) Inventor: PRANG, Harald, 50374 Erftstadt (DE); CHATTERJEE, Michael, 50374 Bruehl (DE); KUEHL, Reinhard, 53332 Bornheim (DE); SEIFERT, Alexander, 50374 Erftstadt (DE)
(74) Representative: Seelert, Stefan
(86) International application number: PCT/EP2017/053219
(87) International publication number: WO 2017/140648

(56) References cited:
- EP-A1- 1 832 620
- EP-A2- 0 801 081
- WO-A1-2009/134142
- WO-A1-2015/188267
- WO-A2-2004/018522

## Description

### FIELD OF THE INVENTION

The present disclosure provides a method for the preparation of a dried powder from a mixture of diluent and powder.

### BACKGROUND OF THE INVENTION

Drying methods for powders are well known in the art. Tray drying has been used for a long time, but has been mostly replaced by fluidized bed drying methods due to an increased drying speed. The fluid bed drying concept is known in the art and used for drying of wet solids. Fluidized bed drying provides controlled and uniform drying conditions.

However, fluidized bed drying is associated with problems. If a wet cake or slurry is introduced it may not be readily fluidizable. Even if a fluid consistency is achieved the wet cake is often not fluidized entirely. However, in this case portions of the cake can plug openings or apertures in grids such as perforated plates, leading to a built-up of wet material. Furthermore, said non-fluidized portions can cover heating elements and thus decrease heating efficiency drastically. If such a plugging of apertures or blocking of heating elements occurs the facility has to be stopped and cleaned. In particular if the powder to be dried comprises significant amounts of low molecular weight polyolefin species, which usually have a waxy consistency, fouling and ultimately thermal blocking of the heating panels may occur requiring inertizing and cleaning of the heating panel. The aforementioned cleaning procedures can result in a downtime of the plant of several days, causing production loss, increasing maintenance costs and reducing throughput of such a facility significantly.

It is known that a recirculation of material can be used to fluidize a feed material that is not readily fluidizable. However, this can result in a decreased throughput and still a cleaning procedure is required quite often.

Although fluidized bed drying with recirculating is multiple times faster than tray drying, there is thus still a need for fast drying methods that require less cleaning cycles.

EP 0 525 748 discloses a method for removing a hydrocarbon from a polymer slurry in a heated flash tank. A portion of the slurry is removed from the flash tank, heated to a temperature above the operating temperature of the flash tank and recirculated to the flash tank. This shall result in a more effective removal of solvent. However, said high temperatures are not suitable for all polymers. Furthermore, such a method requires higher levels of security and pressure resistance and cleanings still will be required often.

WO 2015/188267 A1 discloses plug flow, fluidized bed reactors which have one or more underflow weirs to separate a product zone and a feed zone and to permit internal recirculation of material from the product zone to the feed zone and methods of using such reactors in drying applications. WO 2009/134142 A1 describes a method for fluidized bed spray granulation of liquid products in a device being divided in at least two zones, wherein a feed stream of seed particles and a feed stream of the liquid product are introduced into at least one of the zones.

There is accordingly a need to provide a method featuring a higher throughput of powder than previous solutions. Furthermore, a cleaning of the employed facility shall be less often required if the method is used. A further object is to reduce costs and to maintain a high level of safety.

### SUMMARY OF THE INVENTION

The present disclosure provides a method for the preparation of a dried powder in a facility, wherein the facility comprises
i) a first drying chamber with a first upper end section, an opposing first lower end section and at least one first chamber side wall, the first drying chamber being a back-mixing drying chamber comprising one or more first heating elements, one or more first powder inlets, a first powder outlet, one or more first gas inlets and a first gas outlet,
ii) a second drying chamber with a second upper end section, an opposing second lower end section and at least one second chamber side wall, the second drying chamber comprising one or more second heating elements, a second powder inlet, a second powder outlet, one or more second gas inlets and a second gas outlet,
iii) a first powder passage for transfer of powder from the first into the second drying chamber, which is provided by way of the first powder outlet that is connected to or identical with the second powder inlet,
iv) a conveyor device and optionally a second powder passage for transfer of powder from the second drying chamber into the first drying chamber.

In said facility a mixture of powder and diluent, having a first average concentration by weight of diluent, is introduced through the one or more first powder inlets into the first drying chamber and a pre-dried powder, having a second average concentration by weight of diluent, is transferred from the first drying chamber into the second drying chamber through the first powder passage, wherein the diluent is for the most part or entirely removed from the mixture of powder and diluent after passage through the first and second drying chamber forming in the second drying chamber a dried powder, having a third average concentration by weight of diluent, wherein the first average concentration of diluent is higher than the second average concentration of diluent and the second average concentration of diluent is higher than the third average concentration of diluent, and wherein a recirculation portion of dried powder is transferred from the second drying chamber into the first drying chamber using the conveyor device and optionally the second powder passage and a discharge portion of dried powder is discharged from the second drying chamber.

In some embodiments, the method comprises the following steps:
a) introducing the mixture of powder and diluent through the one or more first powder inlets into the first drying chamber,
b) heating the mixture of powder and diluent by the one or more first heating elements to a first temperature in a first gas flow introduced through the one or more first gas inlets and discharged through the first gas outlet, forming the pre-dried powder,
c) transferring the pre-dried powder through the first powder passage into the second drying chamber,
d) heating the pre-dried powder by the one or more second heating elements to a second temperature in a second gas flow introduced through the one or more second gas inlets and discharged through the second gas outlet, forming the dried powder,
e) transferring the recirculation portion of the dried powder through the conveyor device and optionally through the second powder passage from the second drying chamber into the first drying chamber, and discharging a discharge portion of the dried powder through the second powder outlet from the second drying chamber.

In some embodiments, the first average concentration of diluent in the mixture of powder and diluent is higher than the second average concentration of diluent in the pre-dried powder and the second average concentration of diluent in the pre-dried powder is higher than the third average concentration of diluent in the dried powder and/or the first average concentration of diluent in the mixture of powder and diluent is in the range of from 15 wt.% to 50 wt.% and the third average concentration of diluent in the dried powder is less than 10 wt.%.

In some embodiments, the powder is a polymer powder.

In some embodiments, the powder is a polyolefin powder.

In some embodiments, the mixture of powder and diluent is a mixture of polyethylene and a hydrocarbon diluent.

In some embodiments, the polyolefin is a bimodal or multimodal polyolefin.

In some embodiments, the first and second gas flows are selected from a nitrogen gas flow or a hydrocarbon gas flow, and/or the first and second gas flows as well as the diluents are recycled.

In some embodiments, the temperatures of the first and second heating elements are in the range from 60 to 125°C and/or wherein the first and second heating elements are heated using water or steam.

In some embodiments, an average combined residence time of powder in the first and second drying chamber is less than 60 min and/or the average recirculation portion of powder corresponds to 5 to 60% of the average total powder throughput.

In some embodiments, the facility comprises a first grid as a first intermediate floor comprising or consisting of a heat resistant material, wherein the first powder outlet and the first gas outlet are arranged above the first grid and the one or more first gas inlets are arranged below the first grid in such a way that the first grid separates the one or more first powder inlets and the first powder outlet from the one or more first gas inlets, wherein the first grid is a first intermediate floor upon which powder is deposited in the first chamber, wherein a first gas is conducted from the one or more first gas inlets through the first grid into the first gas outlet, and/or the facility comprises a second grid as a second intermediate floor comprising or consisting of a heat resistant material, wherein the second powder outlet and the second gas outlet are arranged above the second grid and the one or more second gas inlets are arranged below the second grid in such a way that the second grid separates the second powder inlet and the second powder outlet from the one or more second gas inlets, wherein the second grid is a second intermediate floor upon which powder is deposited in the second chamber, wherein a second gas is conducted from the one or more second gas inlets through the second grid into the second gas outlet.

In some embodiments, the first chamber side wall also constitutes at least a section of the second chamber side wall or is arranged next to the second chamber side wall, wherein said first chamber side wall comprises the first powder passage and wherein said first powder passage is a first aperture in the first chamber side wall.

In some embodiments, the conveyor is selected from a group consisting of a spiral conveyor, a tube chain conveyor and a pneumatic conveying device.

In some embodiments, the one or more first and second heating elements are of the tube bundle type or of the plate type and are arranged inside the chamber at a distance from the at least one first and second chamber walls, or one or more first heating elements are in thermal operative connection with the at least one first chamber side wall or integrated into the at least one first chamber side wall and the one or more second heating elements are in thermal operative connection with the at least one second chamber side wall or integrated into the at least one second chamber side wall.

The present disclosure further provides a process for the preparation of a polyolefin comprising the steps of
a) continuously polymerizing one or more olefin monomers in a diluent at temperatures of from 20 °C to 200°C and pressures of from 0.1 to 20 MPa in the presence of a polymerization catalyst in one or more polymerization reactors,
b) yielding a slurry comprising solid polyolefin particles and a diluent,
c) mechanically separating the polyolefin particles from some of the diluent resulting in a mixture of polyolefin powder and diluent having a lower content of diluent than the slurry yielded in step b),
d) drying the mixture of polyolefin powder and diluent obtained in step c) by embodiments of the methods for the preparation of a dried powder.

### BRIEF DESCRIPTION OF THE DRAWINGS

In the figures:
Figure 1: shows a schematic view of the method of the preparation of a polymer powder prior to the drying stage;
Figure 2: shows a first embodiment of a setup of drying chambers for the preparation of a dried powder in accordance with the method of the present disclosure;
Figure 3: shows the schematic view of the setup of Fig. 2 within a facility suitable for the method according to the present disclosure;
Figure 4: shows a second embodiment of a setup of drying chambers for the preparation of a dried powder in accordance with the method of the present disclosure; and

### DETAILED DESCRIPTION OF THE INVENTION

For the preparation of a dried powder, a two chamber system is known in the art having a first and a separated second drying stage. The whole system is designed to prevent a mixing of powder from the first and second chamber. Therefore usually only a small opening is used to transfer a limited amount of comparatively wet powder from the first chamber to the second chamber comprising powder that is comparatively dry. The purpose of a two chamber system is to prevent a mixing of powders, in particular to prevent a transfer of comparatively dry powder from the second to the first chamber. However, surprisingly it was found that a recirculation in accordance with the present disclosure improves the two chamber system and in particular the drying procedure significantly, e.g. in terms of increased flowability and fluidibility of the mixture in the first drying chamber, reduction of fouling, reduction of downtime, reduction of number and duration of cleaning operations, reduction of maintenance costs and reduction of production loss. And, with the method of the present disclosure, throughput can be significantly increased.

It should be understood that the use of "and/or" is defined inclusively, such that the term "a and/or b" should be read to include the sets: "a and b", "a or b", "a", "b". Preferably and in most cases "a and/or b" relates to two entities "a" and "b", wherein at least one of said entities is present in the embodiment described.

It should be understood that the term powder relates to a multitude of solid particles that are capable of flowing in a dried state. However, the term does not necessarily relate to a specific consistency if powder is mixed with a diluent. If very little liquid is used, this will barely affect the properties of the powder. If more liquid is combined with powder, a cake may be formed that is solid to some degree. If even more diluent is used, a slurry or suspension is formed. Preferably powder relates to a particulate material having a mean particle diameter of from 50 µm to 3000 µm.

It should be understood that the term "dried" or "drying" refers to the thermally assisted removal of a diluent, which may be any liquid, such as a hydrocarbon liquid or water. Preferably the liquid is a hydrocarbon liquid.

The drying chambers of the facility comprise various inlets and outlets for feeding and withdrawing powder and gas to and from the drying chambers. Each of these inlets and outlets can be a single inlet or outlet. It is however also possible that these inlets or outlets are constructed as a plurality of inlets and outlets. That means each of these inlets and outlets can be a combination of two, three, four or more of these inlets and outlets. In a preferred embodiment of the method of the present disclosure, the first powder inlet is a combination of from two to eight first powder inlets, more preferably from two to six first powder inlets and especially from two to four first powder inlets.

The first powder passage for transfer of powder from the first into the second drying chamber preferably is or comprises an aperture in the first wall of the first chamber. If the first wall is also part of the second chamber or directly adjacent to the second chamber, it may be identical with the second powder inlet, i.e. relate to the very same aperture that functions as powder passage or part of the powder passage. However, it is also possible in one embodiment according to the present disclosure that the powder passage is formed by a tube or pipe having two endings that are forming the first powder outlet and the second powder inlet. The powder passage can further also be formed by an intermediate chamber which is connected to the first powder inlet and the second powder outlet.

In a preferred embodiment of the method according to the present disclosure, the method comprises the following steps:
a) introducing the mixture of powder and diluent (first mixture of powder and diluent), having a first average concentration by weight of diluent, through one or more first powder inlets, e.g.one to eight powder inlets, into the first drying chamber,
b) heating the mixture with the one or more first heating elements to a first temperature in a first gas flow introduced through the one or more first gas inlets and discharged through the first gas outlet, forming a pre-dried powder (second mixture of powder and diluent), having a second average concentration by weight of diluent,
c) transferring the pre-dried powder through the first powder passage into the second drying chamber,
d) heating the pre-dried powder with the one or more second heating elements to a second temperature in a second gas flow introduced through the one or more second gas inlets and discharged through the second gas outlet, forming a dried powder (third mixture of powder and diluent), having a third average concentration by weight of diluent,
e) transferring a portion of the dried powder comprising a recirculation portion of dried powder through the conveyor device and optionally the second powder passage from the second drying chamber into the first drying chamber, and discharging a discharge portion of the dried powder through the second powder outlet from the second drying chamber.

It was found that the division of the dried powder into a recirculation portion and a discharge portion as described above results in an improved drying method by which the residual diluent content can be efficiently reduced in combination with a better operability. With the method of the present disclosure separation of the diluent is usually accomplished by way of evaporation. The evaporated diluent which has escaped the first and second drying chamber by assistance of the gas flow can be trapped by condensation means, e.g. a condensation tower, and can also be separated from the gas of the first and second gas flow. In general the mixture of powder and diluent prior to its introduction into the first drying chamber (first mixture of powder and diluent), has been subjected to a preceding mechanical separation of the diluent. In a number of cases, in particular when the mixture contains polymer particles such as polyolefin particles, the diluent concentration of the mixture obtained after mechanical separation of the diluent is in the range from 15 to 60 wt.%.

In the method of the present disclosure, the first average concentration of diluent is higher than the second average concentration of diluent and the second average concentration of diluent is higher than the third average concentration of diluent. It is preferred that the third average concentration of diluent is at least 75% lower and more preferably at least 90% lower than the first average concentration. In one preferred embodiment the first average concentration of diluent is in the range of 15 wt.% to 50 wt.% and the third average concentration of diluent is less than 10 wt.%, for example less than 1 wt.% or even not above 0.1 wt.%. In most cases a residual diluent content in the dried powder of 1 wt.% or less can be accomplished with the method of the present disclosure. Recirculating the dried powder (third mixture of powder and diluent) which is significantly drier than the introduced mixture of powder and diluent (first mixture of powder and diluent) leads to an improved fluidization in the first chamber. The method of the present disclosure usually achieves a homogeneous distribution of the diluent in the powder present in the first chamber in a short period of time. That is, the residual diluent content in the particles within the first chamber is essentially the same for the entire content of the first chamber.

Preferably the amount of diluent evaporated in the first drying chamber is from 70 to 97 wt.% of the amount of diluent evaporated in the drying facility and the amount of diluent evaporated in the second drying chamber is preferably from 3 to 30 wt.% of the amount of diluent evaporated in the drying facility.

In a preferred embodiment, in step c) and/or e) the powder is transferred continuously. This can be advantageous to provide a continuous throughput.

In an also preferred alternative embodiment, in step c) and/or e) the powder is transferred intermittently. This occurs preferably by an automatic method in which the powder is removed regularly, preferably after a specific time interval.

Generally the first temperature is less than the second temperature. Preferably the first temperature is in the range from 50 °C to 90 °C, more preferably from 55 °C to 70 °C and the second temperature is in the range from 60 °C to 105°C, more preferably 75°C to 100°C.

Preferably the powder is a polymer powder. In particular polyolefins were found to be dried efficiently using the above method. In a particularly preferred embodiment the mixture of powder and diluent is a mixture of polyethylene and a hydrocarbon diluent or a mixture of polypropylene and a hydrocarbon diluent.

The method of the present disclosure is particularly suitable for drying bimodal or multimodal polyolefins whereby the terms bimodal and multimodal refer to the modality of the polymer composition, and thereby frequently to the modality of the molecular weight distribution. Such polymers can be obtained from polymerizing olefins in a cascade of two or more polymerization reactors under different reaction conditions. Thus, the "modality" indicates how many different polymerization conditions were utilized to prepare the polyolefin, independently whether this modality of the molecular weight distribution can be recognized as separated maxima in a gel permeation chromatography (GPC) curve or not. Frequently used in the art, and also used herein, the term multimodal can include bimodal. It was found that such bimodal or multimodal polyolefins usually require frequent cleanings of the facility and respond particularly well to the described procedure, i.e. the frequency of cleanings can be reduced to a greater degree than expected.

Preferably the temperatures of the first and second heating elements are in the range of 60 to 125°C, in particular 80 to 120°C. It was found that higher temperatures can affect the efficiency of heating elements negatively, in particular if polyolefins in hydrocarbon diluents are dried. Furthermore, in one embodiment the first and second heating elements are heated using water or steam. Suitable heating elements comprise plate type heating elements and tube bundle type heating elements.

In another preferred embodiment the average combined residence time of powder in the first and second drying chamber is less than 60 min, in particular less than 30 min. The required average combined residence time is among other influences affected by the temperatures of the first and/or second heating elements, speed of the first and/or second gas flow, the type of diluent and the amount of recirculation.

Furthermore, it is preferred that the average recirculating portion of powder is 5 to 60%, in particular 10 to 50%, of the average total powder throughput. Surprisingly a rather high amount of recirculation results in a better overall throughput, although much of the dried material is refed into the drying process. It is assumed that the improved fluidity of the mixture of the first chamber increases drying efficiency strongly overcoming the unfavorable effect of having to refeed already dried material back into the drying process.

In some embodiments of the method, the facility comprises a first grid as a first intermediate floor comprising or consisting of a heat resistant material, wherein the first powder outlet and the first gas outlet are arranged above the first grid and the one or more first gas inlets are arranged below the first grid in such a way that the first grid separates the one or more first powder inlets and the first powder outlet from the one or more first gas inlets, wherein the first grid is a first intermediate floor upon which powder is fluidized in the first chamber. The first grid can be, for example, a perforated plate or a sparger plate. In a preferred embodiment more than one first powder inlet is employed, e.g. two to six or preferably two to four first powder inlets. Preferably a first gas is conducted from the one or more first gas inlets through the first grid into the first gas outlet. In this embodiment the powder is dried by a first gas flow that flows through the grid and exits through the first gas outlet continuously transporting diluent. In one embodiment the space below the first grid is divided into two or more, e.g. four, five or six separated compartments through which the first gas coming out of the one or more first gas inlets is passed through the first grid. In another embodiment a multitude of first gas inlets are employed below the grid, even with one or more of the aforementioned compartments.

In further embodiments of the method, the second chamber features an analogous setup, wherein the facility comprises a second grid as a second intermediate floor comprising or consisting of a heat resistant material, wherein the second powder inlet, the second powder outlet and the second gas outlet are arranged above the second grid and the one or more second gas inlets are arranged below the second grid in such a way that the second grid separates the second powder inlet and the second powder outlet from the one or more second gas inlets, wherein the second grid is a second intermediate floor upon which powder is fluidized in the second chamber, wherein a second gas flow is conducted from the one or more second gas inlets through the second grid into the second gas outlet. The second grid can be, for example, a perforated plate or a sparger plate. In one embodiment the space below the second grid is divided into two or more, e.g. four, five or six separated compartments through which the second gas coming out of the one or more second gas inlets is passed through the second grid.

It should be noted that "upper", "top" or "above" as well as "lower", "bottom" or "below" refers to the arrangement of elements in the facility as assembled and as used and in accordance with the gravitational force of earth. Thus a bottom section is closer to the center of earth than a top section. This does not preclude a non-usable stage, wherein the arrangement deviates, e.g. during transportation of a disassembled facility to the installation site.

Preferably both chambers have a grid as described above. In particular it is preferred that the chambers have similar dimensions, wherein the volume, i.e. the available space within the respective chamber, does not differ more than 75%, preferably not more than 50%, in particular not more than 25% from each other.

In one embodiment of the method, the first chamber side wall also constitutes at least a section of the second chamber side wall or is arranged next to the second chamber side wall, wherein said first chamber side wall comprises the first powder passage and wherein said first powder passage is a first aperture in the first chamber side wall. Thus the distance the powder has to be transported is minimized. The first chamber side wall may comprise a second powder passage leading to the second drying chamber above the first powder passage and/or at an upper portion of the first chamber side wall, wherein said second powder passage is a second aperture in the first chamber side wall. However, it may not be completely avoidable that also some material passes from the first chamber through the second powder passage into the second chamber. This can to some degree limit the efficiency increase as described. Accordingly, using a conveyor device for transferring material from the second chamber into the first chamber has the advantage that the flow rate of powder transferred from the second drying chamber to the first drying chamber can be controlled, e.g. by adjusting the speed of the conveyor. This allows for example to adapt the recirculation flow rate to the nature of the powder to be dried. For products which are more difficult to fluidize, the flow rate can be increased while for others the flow rate can be kept at a minimum value. Furthermore, it is also conceivable using a combination of a second powder passage and a conveyor device.

Preferably the conveyor device is selected from a group consisting of a spiral conveyor, a tube chain conveyor and a pneumatic conveying device. Said conveyors have been found to be advantageous when operating with powders. Particularly preferred are spiral conveyors, also called screw conveyors.

In another embodiment of the method, the one or more first and second heating elements are of the tube bundle type or of the plate type and are arranged inside the chamber at a distance from the at least one first and second chamber walls.

Additionally or alternatively the one or more first heating elements are in thermal operative connection with the at least one first chamber side wall or integrated into the at least one first chamber side wall and/or the one or more second heating elements are in thermal operative connection with the at least one second chamber side wall or integrated into the at least one second chamber side wall.

Preferably a first gas flow is conducted through the first chamber, wherein the one or more first gas inlets introduce the first gas flow into the chamber and the first gas outlet emits the first gas flow from the first chamber. Additionally, a second gas flow may be conducted through the second chamber, wherein the one or more second gas inlets introduce the second gas flow into the chamber and the second gas outlet emits the second gas flow from the second chamber.

In a further embodiment of the method, the first gas outlet is connected to a first separating unit, preferably a first cyclone separator, for separating residual powder, which is carried by the first gas flow through the first gas outlet out of the first chamber, from diluent and gas that is carried through the first gas outlet. It is preferred that the residual powder that is separated by the first separating unit is introduced into the second chamber through a third powder inlet.

In a further embodiment of the method of the present disclosure, the second gas outlet is connected to a second separating unit, preferably a second cyclone separator, for separating residual powder which is carried by the second gas flow through the second gas outlet out of the second chamber from diluent and gas that is carried through the second gas outlet. It is preferred that the residual powder that is separated from the second gas flow by the second separating unit is added to the powder discharged through the second powder outlet.

The method can be carried out using a first and second gas flow selected from a nitrogen gas flow or another inert gas flow or a hydrocarbon gas flow. It is particularly preferred that the first and second gas flows as well as the diluent are recycled. In particular it is preferred that the first and second gas flow are part of a larger gas circulation pathway, wherein the first gas flow leads to a third separating unit, in particular a condensation tower, that separates gas from diluent and the separated gas forms the second gas flow leading to the one or more second gas inlets through the second chamber and out of the second gas outlet. For said circulation pathway, it is preferred that the second gas flow, after having passed the second gas outlet and the second separating unit, leads to the one or more first gas inlets of the first chamber and forms the first gas flow upon entering. In the condensation tower the diluent is liquefied and recovered so that it can, for example, be again employed in polymerization processes.

Preferably the third separating unit is a condensation tower which is cooled by a cooling fluid. In one advantageous embodiment, the diluent is also the cooling fluid. Furthermore, it is preferred that the third separating unit comprises a discharge unit for diluent.

Preferably the gas circulation pathway comprises at least one gas conveying device. In particular it is preferred that the second gas flow comprises a first and a second gas conveying device. In one embodiment the first gas conveying device is arranged in the gas circulation pathway downstream the third separating unit and upstream the one or more second gas inlets and the second gas conveying device is arranged in the gas circulation pathway downstream the second gas outlet and upstream the one or more first gas inlets. Preferably the above mentioned gas conveying devices are fans or blowers.

In one embodiment of the method, gas and powder is heated inside the first and second chambers. Due to evaporation of said diluent in said chambers, the temperature of the gas flow after leaving said chambers can in some cases be decreased compared to the temperature of the gas introduced into said chambers. However, due to the heating elements inside said chambers the temperature of the gas flow can also be kept essentially constant or even be increased.

In accordance with several embodiments of the method of the present disclosure, the recirculation and the discharge portions of the dried powder can be separated before these portions are removed from the chamber using a second and a third powder outlet or the both portions are transferred through the second chamber powder outlet and are separated afterwards into the recirculation and discharge portions. Other possibilities in accordance with the disclosure can be envisioned, e.g. that the second separating unit provides the recirculation portion at least partially.

The drying chambers can be constructed according to any known methods for drying particulate material. It is accordingly possible that the particles can freely flow through the whole interior space of the drying chambers. It however also possible that the drying chambers comprise installations which partly or predominantly direct the flow of the particles within the drying chambers. The first drying chamber is a back-mixing drying chamber; that means that the content of the first drying chamber can freely flow through the entire interior space of the first drying chamber. The second drying chamber is preferably a back-mixing drying chamber or a plug-flow drying chamber, i.e. a drying chamber in which all particles move through the drying chamber with the same velocity.

In one embodiment of the method of the present disclosure, the facility comprises between the first drying chamber and the second drying chamber one or more further drying chambers. The pre-dried powder discharged from the first drying chamber is then passed through these one or more further drying chambers, preferably including a further reduction of the average concentration of diluent, and finally a pre-dried powder is introduced into the second drying chamber. The one or more further drying chambers are not necessarily equipped with heating elements.

It should be understood that units, embodiments and other elements that are explicitly described as being suitable for a certain method are preferably used as part of such a method. Thus, a first gas inlet is preferably used within the method for letting gas in, a heating element is preferably used within the method for a heating step, a gas conveying gas is preferably used within the method for transporting gas, and so forth.

The present disclosure further provides a process for the preparation of a polyolefin comprising the steps of
a) continuously polymerizing one or more olefin monomers in a diluent at temperatures of from 20 °C to 200°C and pressures of from 0.1 to 20 MPa in the presence of a polymerization catalyst in one or more polymerization reactors,
b) yielding a slurry comprising solid polyolefin particles and a diluent,
c) mechanically separating the polyolefin particles from some of the diluent resulting in a mixture of polyolefin powder and diluent having a lower content of diluent than the slurry yielded in step b),
d) drying the mixture of polyolefin powder and diluent obtained in step c) by the method as described above.

It was found that polyolefins obtained under the above reaction conditions and mechanically separated from the diluent according to step c), are particularly well dried using the method at hand.

The polyolefins can be homopolymers or copolymers of olefins and of 1-olefins, i.e. hydrocarbons having terminal double bonds, without being restricted thereto. Preferred monomers are nonpolar olefinic compounds, including aryl-substituted 1-olefins. Particularly preferred 1 -olefins are linear or branched C₂-C₁₂-1-alkenes, in particular linear C₂-C₁₀-1 -alkenes such as ethylene, propylene, 1-butene, 1-pentene, 1-hexene, 1-heptene, 1-octene, 1-decene or branched C₂-C₁₀-1-alkenes such as 4-methyl-1-pentene, conjugated and nonconjugated dienes such as 1,3-butadiene, 1,4-hexadiene or 1,7-octadiene or vinylaromatic compounds such as styrene or substituted styrene. It is also possible to polymerize mixtures of various 1-olefins. Suitable olefins also include ones in which the double bond is part of a cyclic structure which can have one or more ring systems. Examples are cyclopentene, norbornene, tetracyclododecene or methyl-norbornene or dienes such as 5-ethylidene-2-norbornene, norbornadiene or ethylnorbornadiene. It is further possible to polymerize mixtures of two or more olefins.

The polymerization process is in particular a process for preparing homopolymers or copolymers of ethylene or propylene. As comonomers in propylene polymerization, preference is given to using up to 40 wt.% of ethylene and/or 1-butene.

In a preferred embodiment, the process of the present disclosure refers to preparing a polyolefin obtained by homopolymerizing or copolymerizing ethylene. Particular preference is given to preparing polyethylenes in which ethylene is copolymerized with up to 40 wt.% of C₃-C₈-1-alkenes, preferably 1-butene, 1-pentene, 1-hexene, 1-octene, or mixtures thereof. Particular preference is given to a process in which ethylene is copolymerized with up to 20 wt.% of 1-butene, 1-hexene, or mixtures thereof.

The process of the present disclosure may be employed for drying all types of common polyolefins. The polyolefins can be prepared by all industrially known low-pressure polymerization methods carried out in the presence of a diluent. This includes solution and suspension or slurry processes conducted at temperatures in the range from 20 to 200°C, preferably from 30 to 150°C and particularly preferably from 40 to 130°C, and under pressures of from 0.1 to 20 MPa and particularly preferably from 0.3 to 5 MPa. The polymerization can be carried out batchwise or preferably continuously in one or more stages. Processes of this type are generally known to those skilled in the art. The polymerization of the present disclosure is preferably carried out in slurry, in particular in loop reactors or stirred tank reactors. That means, the polymerization takes place in a medium, the so-called suspension medium, which is in liquid or in supercritical state under the conditions in the respective polymerization reactor and in which the produced polyolefin is insoluble and forms solid particles. The solids content of the slurry is generally in the range of from 10 to 60 wt.-%, preferably in the range of from 20 to 40 wt.-%.

The suspension medium, which forms the liquid or supercritical phase of the slurry, commonly comprises as main component a diluent but also comprises further components like, for example, solved monomers or comonomers, solved cocatalysts or scavengers like aluminum alkyls, solved reaction auxiliaries like hydrogen or solved reaction products of the polymerization reaction like oligomers or waxes. Suitable diluents should be inert, i.e. should not decompose under reaction conditions. Such diluents are for example hydrocarbons having from 3 to 12 carbon atoms, and in particular saturated hydrocarbons like isobutane, butane, propane, isopentane, pentane, hexane or octane, or a mixture of these. It is also possible to use unsaturated hydrocarbons such as monomers themselves like propylene as diluent. The diluent preferably has a boiling point which is significantly different from those of the monomers and comonomers used in order to make it possible for these starting materials to be recovered from a mixture by distillation. Such diluents are for example hydrocarbons having a boiling point above 40 °C or even above 60°C or mixtures comprising a high proportion of these hydrocarbons. Thus, the process of the present disclosure is especially advantageous if the polymerization takes place in a liquid suspension medium comprising more than 50 wt.% of saturated hydrocarbons having a boiling point of above 60°C at 0.1 MPa or even comprising more than 80 wt.-% of saturated hydrocarbons having a boiling point of above 60°C at 0.1 MPa.

In a preferred embodiment of the present disclosure, the polymerization is carried out in a cascade of at least two polymerization reactors which are connected in series. These reactors are not restricted to any specific design; preferably these reactors are however loop reactors or stirred tank reactors. There is no limit to the number of reactors of such a cascade, however preferably the cascade consist of two, three or four reactors and most preferably of two or three reactors. If a cascade of polymerization reactors is used in the process of the present disclosure the polymerization conditions in the polymerization reactors can differ, for example by the nature and/or the amount of comonomers or by different concentrations of polymerization auxiliaries such as hydrogen.

A further preferred slurry polymerization process is slurry polymerization in loop reactors, where the polymerization mixture is pumped continuously through a cyclic reactor tube. As a result of the pumped circulation, continual mixing of the reaction mixture is achieved and the catalyst introduced and the monomers fed in are distributed in the reaction mixture. Furthermore, the pumped circulation prevents sedimentation of the suspended polymer. The removal of the heat of reaction via the reactor wall is also promoted by the pumped circulation. In general, these reactors consist essentially of a cyclic reactor tube having one or more ascending legs and one or more descending legs which are enclosed by cooling jackets for removal of the heat of reaction and also horizontal tube sections which connect the vertical legs. The impeller pump, the catalyst feed facilities and the monomer feed facilities and also the discharge facility, thus normally the settling legs, are usually installed in the lower tube section. However, the reactor can also have more than two vertical tube sections, so that a meandering arrangement is obtained.

Preferably, the slurry polymerization is an ethylene polymerization carried out in the loop reactor at an ethylene concentration of at least 5 mole percent, preferably 10 mole percent, based on the suspension medium. In this context, suspension medium does not mean the fed suspension medium such as isobutane alone but rather the mixture of this fed suspension medium with the monomers dissolved therein. The ethylene concentration can easily be determined by gas-chromatographic analysis of the suspension medium.

The polymerization can be carried out using all customary olefin polymerization catalysts. That means, the polymerization can be carried out using Phillips catalysts based on chromium oxide, using titanium-based Ziegler- or Ziegler-Natta-catalysts, or using single-site catalysts. For the purposes of the present disclosure, single-site catalysts are catalysts based on chemically uniform transition metal coordination compounds. Particularly suitable single-site catalysts are those comprising bulky sigma- or pi-bonded organic ligands, e.g. catalysts based on mono-Cp complexes, catalysts based on bis-Cp complexes, which are commonly designated as metallocene catalysts, or catalysts based on late transition metal complexes, in particular iron-bisimine complexes. Furthermore, it is also possible to use mixtures of two or more of these catalysts for the polymerization of olefins. Such mixed catalysts are often designated as hybrid catalysts. The preparation and use of these catalysts for olefin polymerization are generally known.

Preferred catalysts are of the Ziegler type preferably comprising a compound of titanium or vanadium, a compound of magnesium and optionally a particulate inorganic oxide as support.

The process of the present disclosure is especially suitable for drying bimodal or multimodal polyolefins whereby the terms bimodal and multimodal refer to the modality of the molecular weight distribution. Such polymers can be obtained from polymerizing olefins in a cascade of two or more polymerization reactors under different reaction conditions. It is however also possible to obtain such bimodal or multimodal polyolefins by employing mixed catalysts. In addition to the molecular weight distribution, the polyolefin can also have a comonomer distribution, wherein preferably the average comonomer content of polymer chains with a higher molecular weight is higher than the average comonomer content of polymer chains with a lower molecular weight.

The polyolefins are usually obtained as powder that means in form of small particles. The particles which have usually a more or less regular morphology and size, depending on the catalyst morphology and size, and on polymerization conditions. Depending on the catalyst used, the particles of the polyolefin powder usually have a mean diameter of from a few hundred to a few thousand micrometers. In the case of chromium catalysts, the mean particle diameter is usually from about 300 to about 1600 µm, and in the case of Ziegler type catalysts the mean particle diameter is usually from about 50 to about 3000 µm. Preferred polyolefin powders have a mean particle diameter of from 100 to 250 µm. The particle size distribution can, for example, advantageously be determined by sieving. Suitable technics are e.g. vibrating sieve analysis or sieve analysis under an air jet.

Preferred polyolefins for preparing the polyolefin compositions of the present disclosure are polyethylenes having an ethylene content of from 50 to 100 wt.%, more preferably from 80 to 100 wt.%, and in particular from 98 to 100 wt.%. Accordingly, the content of other olefins in the polyethylenes is preferably from 0 to 50 wt.%, more preferably from 0 to 20 wt.%, and in particular from 0 to 2 wt.%.

The density of preferred polyethylene compositions obtained by the process of the present disclosure is from 0.90 g/cm³ to 0.97 g/cm³. Preferably the density is in the range of from 0.920 to 0.968 g/cm³ and especially in the range of from 0.945 to 0.965 g/cm³. The density has to be understood as being the density determined according to DIN EN ISO 1183-1:2004, Method A (Immersion) with compression molded plaques of 2 mm thickness which were pressed at 180 °C, 20MPa for 8 minutes with subsequent crystallization in boiling water for 30 minutes.

The process of the present disclosure is especially suitable for the preparation of polyethylenes having a MFR_{21.6} at a temperature of 190 °C under a load of 21.6 kg, determined according to DIN EN ISO 1133:2005, condition G, of from 0.5 to 300 g/10 min, more preferably of from 1 to 100 g/10 min, even more preferably of from 1.2 to 100 g/10 min and especially of from 1.5 to 50 g/10 min.

According to the present disclosure, the counter-intuitive idea of implementing a recirculation system according to the disclosure in a two chamber system, which usually is only used to prevent any back mixing, leads to a significant improvement of efficiency. In particular it was found that polyolefin powders can be dried better than using previous methods.

Further features and advantages of the present disclosure will become apparent from the following description, in which exemplary embodiments of the disclosure are explained with reference to schematic drawings, by way of example and without limiting the invention.

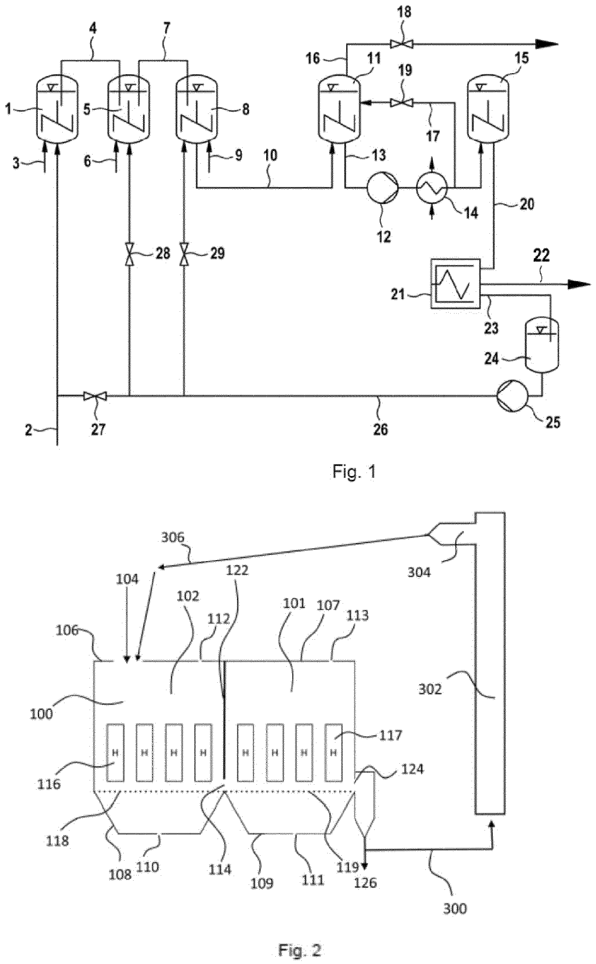

Figure 1 shows a preferred embodiment of the process for preparing polyolefins, prior to the application of the drying method in accordance with the present disclosure. The diluent for polymerizing the olefins in the first polymerization reactor (1) in slurry is fed to the reactor via feeding line (2) while the other components of the reaction mixture like catalyst, monomer, possible comonomers and polymerization auxiliaries are fed to the reactor via one or more feeding lines (3). As result of the polymerization in reactor (1) a slurry of solid polyolefin particle in a suspension medium is formed. This slurry is fed via line (4) to the second polymerization reactor (5) where further polymerization occurs. Fresh comonomer or further components of the reaction mixture can be fed to reactor (5) via one or more feeding lines (6). The slurry of reactor (5) is thereafter fed via line (7) to the third polymerization reactor (8) in which additional polymerization is carried out. One or more feeding lines (9) allow supplementary feeding of comonomer or further components of the reaction mixture to reactor (8).The slurry of solid polyolefin particle in the suspension medium formed in reactor (8) is continuously transferred via line (10) to moderating vessel (11), which is operated in a way that the mean residence time is about 20 min. The content of moderating vessel (11) is withdrawn by means of pump (12) via line (13), passed through heat exchanger (14) and transferred to collecting vessel (15). For cooling the slurry in moderating vessel (11), which is required since on the one hand slurry of a higher temperature is continuously added through line (10) and on the other hand to remove the heat of the after-polymerization, which takes place in moderating vessel (11), it is possible to evaporate a part of the suspension medium and remove the generated gas via line (16) and to return a part of the slurry cooled in heat exchanger (14) via line (17) back to moderating vessel (11). To regulate the cooling or to suppress one or both of them, lines (16) and (17) are equipped with valves (18) and (19). The slurry is then passed via line (20) to centrifuge (21), where the solid polyolefin particles are separated from the liquid suspension medium. The isolated polyolefin particles, which after mechanical removal of the liquid suspension medium still have from 10 to 40 wt.-% of residual moisture, i.e. of residual diluent, are conducted via line (22) to a dryer and dried in accordance with the method of the present disclosure. The isolated suspension medium is transferred via line (23) to a collecting vessel (24) and from there by means of pump (25) via line (26) to polymerization reactors (1), (5) and/or (8). Line (26) and its branch-offs are equipped with valves (27), (28) and (29).

Figure 2 shows a first embodiment of a setup of drying chambers for the preparation of a dried powder in accordance with the method at hand, wherein the facility comprises a first drying chamber (100) with a first upper end section (106), an opposing first lower end section (108) and a first chamber side wall (122), the first drying chamber (100) comprising a first heating element (116), a first powder inlet (104), a first powder outlet that is formed by the first powder passage which is an aperture (114), a first gas inlet (110) and a first gas outlet (112). Figure 2 further shows a second drying chamber (101) with a second upper end section (107), an opposing second lower end section (109) and a second chamber side wall that is on one side identical with the first chamber side wall (122), the second drying chamber (101) comprising a second heating element (117), a second powder inlet that is formed by the first powder passage which is an aperture (114), a second powder outlet (124), a second gas inlet (111) and a second gas outlet (113). The first powder passage, which is an aperture (114) through which more powder is transferred from the first into the second drying chamber than from the second into the first drying chamber, is provided by way of the first powder outlet that is identical with the second powder inlet. According to the method a mixture of powder and diluent is introduced through the first powder inlet (104) into the heated first drying chamber (100) and the pre-dried powder is transferred into the heated second drying chamber (101) through the first powder passage (114). Most of the diluent is removed from the powder by evaporation in the first and second drying chambers (100, 101), using a first gas flow (not shown) that enters the first chamber through the first gas inlet (110) and exits the first chamber (100) through the first gas outlet (112) and a second gas flow (not shown) that enters the heated second chamber (101) through the second gas inlet (111) and exits the second chamber through the second gas outlet (113). The powder is dried above a first grid (118) in the first chamber (100) and above a second grid (119) in the second chamber (101). The gas flows penetrate through the respective grids (118, 119) and take up evaporated diluent that is carried out of the chamber by way of the respective gas outlets (112, 113). A portion (300) of the obtained powder (126) is transferred back into the first chamber (100) by a conveyor (302). The conveyor (302) transports the powder to the first powder inlet (104). The powder leaves the conveyor (302) through an exit (304) and travels along a pathway (306) into the first chamber (100). In the example of Fig. 2, the pathway (306) is downward and powder travels along the pathway due to gravitational force. However, it is also possible that the conveyor (302) is directly connected to the first chamber (100) in a way that the powder is falling directly into the first chamber (100) without pathway (306) and it is possible to place the exit (304) adjacent to the first powder inlet (104).

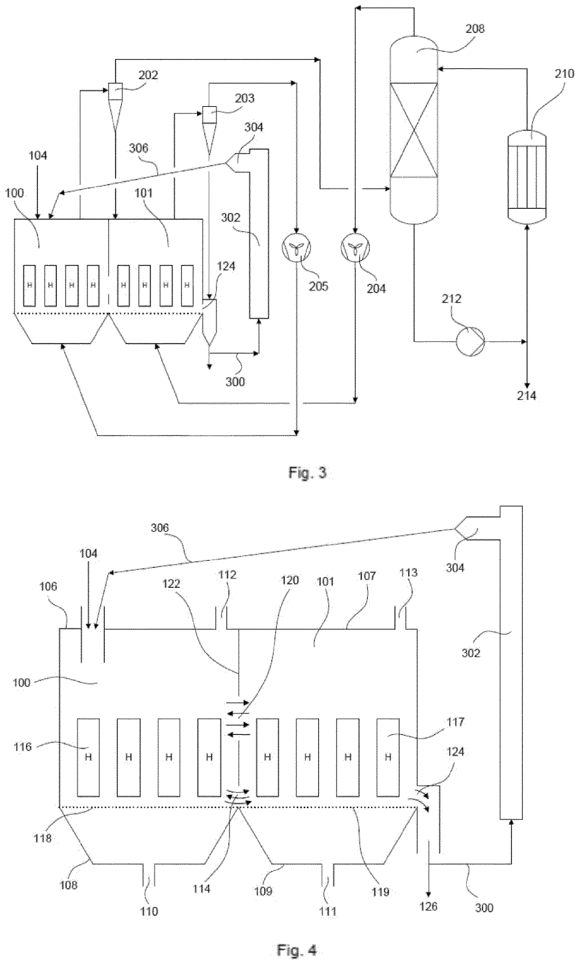

Fig. 3 shows the schematic view of the setup of Fig. 2 within a facility suitable for the method according to the present disclosure. For the sake of clarity some reference numbers of Fig. 2 have been omitted in Fig. 3, but can be derived from Fig. 2. Gas circulating fans (204, 205) that are arranged external of the chambers (100, 101) transport the gas through each chamber (100, 101). Gas that exits through the second gas outlet (113) is freed of powder in a second cyclonic separation step (203). The dried powder resulting from said second cyclonic separation (203) step may be combined with powder that exits through the second powder outlet (124). The gas resulting from said second cyclonic separation step (203) is transported by a fan (205) into the first chamber (100) through the first gas inlet (110). Gas that exits through the first gas outlet (112) is freed of powder in a first cyclonic separation step (202). The dried powder resulting from said first cyclonic separation (203) step may be introduced into the second chamber through a third powder inlet (not shown) at the upper section (107) of the second chamber (101). The gas coming from said second cyclonic separation step (202) is transported to a condensation tower (208), where it is separated from diluent, and transported by a fan (204) into the second chamber (101) through the second gas inlet (111). The condensation tower (208) is cooled using a cooler (210). Diluent separated in the condensation tower is pumped using a pump (212) in a circulating pathway. Thus it is used as a cooling agent and at the same time discharged continuously through a diluent outlet (214).

Fig. 4 shows a second embodiment of a setup of drying chambers for the preparation of a dried powder in accordance with the method at hand. Reference numbers are assigned in accordance with Fig. 2. Fig. 4 differs from Fig. 2 in that a second powder passage formed by another aperture (120) is provided for recirculating powder from the second drying chamber into the first drying chamber.

## Claims

1. A method for the preparation of a dried powder in a facility,
wherein the facility comprises
i) a first drying chamber (100) with a first upper end section (106), an opposing first lower end section (108) and at least one first chamber side wall (122), the first drying chamber (100) being a back-mixing drying chamber comprising one or more first heating elements (116), one or more first powder inlets (104), a first powder outlet (114), one or more first gas inlets (110) and a first gas outlet (112),
ii) a second drying chamber (101) with a second upper end section(107), an opposing second lower end section (109) and at least one second chamber side wall, the second drying chamber (101) comprising one or more second heating elements (117), a second powder inlet (114), a second powder outlet (124), one or more second gas inlets (111) and a second gas outlet (113),
iii) a first powder passage (114) for transfer of powder from the first drying chamber (100) into the second drying chamber (101), which is provided by way of the first powder outlet (114) that is connected to or identical with the second powder inlet (114),
iv) a conveyor device (302) and optionally a second powder passage (120) for transfer of powder from the second drying chamber (101) into the first drying chamber (100),
wherein a mixture of powder and diluent, having a first average concentration by weight of diluent, is introduced through the one or more first powder inlets (104) into the first drying chamber (100) and a pre-dried powder, having a second average concentration by weight of diluent, is transferred from the first drying chamber (100) into the second drying chamber (101) through the first powder passage (114),
wherein the diluent is for the most part or entirely removed from the mixture of powder and diluent after passage through the first and second drying chamber (100, 101) forming in the second drying chamber (101) a dried powder, having a third average concentration by weight of diluent,
wherein the first average concentration of diluent is higher than the second average concentration of diluent and the second average concentration of diluent is higher than the third average concentration of diluent,
wherein a recirculation portion of the dried powder is transferred from the second drying chamber (101) into the first drying chamber (100) using the conveyor device (302) and optionally the second powder passage (120), and
wherein a discharge portion of the dried powder is discharged from the second drying chamber (101).

2. The method according to claim 1 comprising the following steps:
a) introducing the mixture of powder and diluent through the one or more first powder inlets (104) into the first drying chamber (100),
b) heating the mixture of powder and diluent by the one or more first heating elements (116) to a first temperature in a first gas flow introduced through the one or more first gas inlets (110) and discharged through the first gas outlet (112), forming the pre-dried powder,
c) transferring the pre-dried powder through the first powder passage (114) into the second drying chamber (101),
d) heating the pre-dried powder by the one or more second heating elements (117) to a second temperature in a second gas flow introduced through the one or more second gas inlets (111) and discharged through the second gas outlet (113), forming the dried powder,
e) transferring the recirculation portion of the dried powder through the conveyor device (302) and optionally through the second powder passage (120) from the second drying chamber (101) into the first drying chamber (100), and discharging a discharge portion of the dried powder through the second powder outlet (124) from the second drying chamber (101).

3. The method according to claim 2, wherein
the first average concentration of diluent in the mixture of powder and diluent is higher than the second average concentration of diluent in the pre-dried powder and the second average concentration of diluent in the pre-dried powder is higher than the third average concentration of diluent in the dried powder and/or
the first average concentration of diluent in the mixture of powder and diluent is in the range of from 15 wt.% to 50 wt.% and the third average concentration of diluent in the dried powder is less than 10 wt.%.

4. The method according to any of claims 1 to 3, wherein
the powder is a polymer powder.

5. The method according to claim 4, wherein
the powder is a polyolefin powder.

6. The method according to claim 5, wherein
the mixture of powder and diluent is a mixture of polyethylene and a hydrocarbon diluent.

7. The method according to claim 6, wherein
the polyolefin is a bimodal or multimodal polyolefin.

8. The method according to any of claims 2 to 7, wherein
the first and second gas flows are selected from a nitrogen gas flow or a hydrocarbon gas flow, and/or
the first and second gas flows as well as the diluents are recycled.

9. The method according to any of claims 1 to 8, wherein
the temperatures of the first and second heating elements (116, 117) are in the range from 60 to 125°C and/or
wherein the first and second heating elements (116, 117) are heated using water or steam.

10. The method according to any of claims 2 to 9, wherein
an average combined residence time of powder in the first and second drying chamber (100, 101) is less than 60 min and/or
the average recirculation portion of powder corresponds to 5 to 60% of the average total powder throughput.

11. The method according to any of claims 1 to 10, wherein
the facility comprises a first grid (118) as a first intermediate floor comprising or consisting of a heat resistant material, wherein the first powder outlet (114) and the first gas outlet (112) are arranged above the first grid (118) and the one or more first gas inlets (110) are arranged below the first grid (118) in such a way that the first grid (118) separates the one or more first powder inlets (104) and the first powder outlet (114) from the one or more first gas inlets (110), wherein the first grid (118) is a first intermediate floor upon which powder is deposited in the first chamber, wherein a first gas is conducted from the one or more first gas inlets (110) through the first grid (118) into the first gas outlet (112),
and/or
the facility comprises a second grid (119) as a second intermediate floor comprising or consisting of a heat resistant material, wherein the second powder outlet (124) and the second gas outlet (113) are arranged above the second grid (119) and the one or more second gas inlets (111) are arranged below the second grid (119) in such a way that the second grid (119) separates the second powder inlet (114) and the second powder outlet (124) from the one or more second gas inlets (111), wherein the second grid (119) is a second intermediate floor upon which powder is deposited in the second chamber, wherein a second gas is conducted from the one or more second gas inlets (111) through the second grid (119) into the second gas outlet (113).

12. The method according to any of claims 1 to 11, wherein
the first chamber side wall (122) also constitutes at least a section of the second chamber side wall or is arranged next to the second chamber side wall, wherein said first chamber side wall (122) comprises the first powder passage (114) and wherein said first powder passage (114) is a first aperture in the first chamber side wall (122).

13. The method according to any of claims 1 to 12, wherein
the conveyor (302) is selected from a group consisting of a spiral conveyor, a tube chain conveyor and a pneumatic conveying device.

14. The method according to any of claims 1 to 13, wherein
the one or more first and second heating elements (116, 117) are of the tube bundle type or of the plate type and are arranged inside the chamber at a distance from the at least one first and second chamber walls (122), or
wherein one or more first heating elements (116) are in thermal operative connection with the at least one first chamber side wall (122) or integrated into the at least one first chamber side wall (122) and the one or more second heating elements (117) are in thermal operative connection with the at least one second chamber side wall or integrated into the at least one second chamber side wall.

15. A process for the preparation of a polyolefin comprising the steps of
a) continuously polymerizing one or more olefin monomers in a diluent at temperatures of from 20°C to 200°C and pressures of from 0.1 to 20 MPa in the presence of a polymerization catalyst in one or more polymerization reactors,
b) yielding a slurry comprising solid polyolefin particles and a diluent,
c) mechanically separating the polyolefin particles from some of the diluent resulting in a mixture of polyolefin powder and diluent having a lower content of diluent than the slurry yielded in step b),
d) drying the mixture of polyolefin powder and diluent obtained in step c) by the method according to any of claims 1 to 14.

## Patentansprüche

1. Verfahren zur Herstellung eines getrockneten Pulvers in einer Anlage,
wobei die Anlage umfasst:
i) eine erste Trocknungskammer (100) mit einem ersten oberen Endabschnitt (106), einem gegenüber liegenden ersten unteren Endabschnitt (108) und mindestens einer ersten Kammerseitenwand (122), wobei die erste Trocknungskammer (100) eine Rückmisch-Trocknungskammer ist, die ein oder mehrere erste Heizelemente (116), ein oder mehrere erste Pulvereinlässe (104), einen ersten Pulverauslass (114), einen oder mehrere erste Gaseinlässe (110) und einen ersten Gasauslass (112) umfasst,
ii) eine zweite Trocknungskammer (101) mit einem zweiten oberen Endabschnitt (107), einem gegenüber liegenden zweiten unteren Endabschnitt (109) und mindestens einer zweiten Kammerseitenwand, wobei die zweite Trocknungskammer (101) ein oder mehrere zweite Heizelemente (117), einen zweiten Pulvereinlass (114), einen zweiten Pulverauslass (124), einen oder mehrere zweite Gaseinlässe (111) und einen zweiten Gasauslass (113) umfasst,
iii) einen ersten Pulverdurchgang (114) zur Überführung von Pulver aus der ersten Trocknungskammer (100) in die zweite Trocknungskammer (101), die mittels des ersten Pulverauslasses (114) bereitgestellt wird, der mit dem zweiten Pulvereinlass (114) verbunden oder mit diesem identisch ist,
iv) eine Fördervorrichtung (302) und gegebenenfalls einen zweiten Pulverdurchgang (120) zur Überführung von Pulver aus der zweiten Trocknungskammer (101) in die erste Trocknungskammer (100),
wobei eine Mischung aus Pulver und Verdünnungsmittel mit einer ersten durchschnittlichen gewichtsbezogenen Konzentration des Verdünnungsmittels durch den einen oder die mehreren ersten Pulvereinlässe (104) in die erste Trocknungskammer (100) eingebracht wird und ein vorgetrocknetes Pulver mit einer zweiten durchschnittlichen gewichtsbezogenen Konzentration des Verdünnungsmittels von der ersten Trocknungskammer (100) durch den ersten Pulverdurchgang (114) hindurch in die zweite Trocknungskammer (101) überführt wird,
wobei das Verdünnungsmittel nach dem Durchgang durch die erste und zweite Trocknungskammer (100, 101) größtenteils oder vollständig von der Mischung aus Pulver und Verdünnungsmittel entfernt wird, wodurch in der zweiten Trocknungskammer (101) ein getrocknetes Pulver mit einer dritten durchschnittlichen gewichtsbezogenen Konzentration des Verdünnungsmittels gebildet wird,
wobei die erste durchschnittliche Konzentration des Verdünnungsmittels höher als die zweite durchschnittliche Konzentration des Verdünnungsmittels ist, und die zweite durchschnittliche Konzentration des Verdünnungsmittels höher als die dritte durchschnittliche Konzentration des Verdünnungsmittels ist,
wobei ein Rückführungsanteil des getrockneten Pulvers mittels der Fördervorrichtung (302) und gegebenenfalls dem zweiten Pulverdurchgang (120) von der zweiten Trocknungskammer (101) in die erste Trocknungskammer (100) überführt wird, und
wobei ein Austragsanteil des dritten Pulvers aus der zweiten Trocknungskammer (101) ausgetragen wird.

2. Verfahren nach Anspruch 1, umfassend die folgenden Schritte:
a) Einbringen der Mischung aus Pulver und Verdünnungsmittel durch den einen oder die mehreren ersten Pulvereinlässe (104) in die erste Trocknungskammer (100),
b) Erhitzen der Mischung aus Pulver und Verdünnungsmittel durch das eine oder die mehreren ersten Heizelemente (116) auf eine erste Temperatur in einem ersten Gasfluss, der durch den einen oder die mehreren ersten Gaseinlässe (110) eingebracht und durch den ersten Gasauslass (112) ausgetragen wird, wodurch das vorgetrocknete Pulver gebildet wird,
c) Überführen des vorgetrockneten Pulvers durch den ersten Pulverdurchgang (114) in die zweite Trocknungskammer (101),
d) Erhitzen des vorgetrockneten Pulvers durch das eine oder die mehreren zweiten Heizelemente (117) auf eine zweite Temperatur in einem zweiten Gasfluss, der durch den einen oder die mehreren zweiten Gaseinlässe (111) eingebracht und durch den zweiten Gasauslass (113) ausgetragen wird, wodurch das getrocknete Pulver gebildet wird,
e) Überführen des Rückführungsanteils des getrockneten Pulvers durch die Fördervorrichtung (302) und gegebenenfalls durch den zweiten Pulverdurchgang (120) hindurch von der zweiten Trocknungskammer (101) in die erste Trocknungskammer (100), und Austragen eines Austragungsanteils des getrockneten Pulvers durch den zweiten Pulverauslass (124) hindurch aus der zweiten Trocknungskammer (101).

3. Verfahren nach Anspruch 2, wobei
die erste durchschnittliche Konzentration des Verdünnungsmittels in der Mischung aus Pulver und Verdünnungsmittel höher als die zweite durchschnittliche Konzentration des Verdünnungsmittels in dem vorgetrockneten Pulver ist, und die zweite durchschnittliche Konzentration des Verdünnungsmittels in dem vorgetrockneten Pulver höher als die dritte durchschnittliche Konzentration des Verdünnungsmittels in dem getrockneten Pulver ist, und/oder
die erste durchschnittliche Konzentration des Verdünnungsmittels in der Mischung aus Pulver und Verdünnungsmittel im Bereich von 15 Gew.% bis 50 Gew.% liegt, und die dritte durchschnittliche Konzentration des Verdünnungsmittels in dem getrockneten Pulver weniger als 10 Gew.% beträgt.

4. Verfahren nach einem der Ansprüche 1 bis 3, wobei das Pulver ein Polymerpulver ist.

5. Verfahren nach Anspruch 4, wobei das Pulver ein Polyolefinpulver ist.

6. Verfahren nach Anspruch 5, wobei die Mischung aus Pulver und Verdünnungsmittel eine Mischung aus Polyethylen und einem Kohlenwasserstoffverdünnungsmittel ist.

7. Verfahren nach Anspruch 6, wobei das Polyolefin ein bimodales oder multimodales Polyolefin ist.

8. Verfahren nach einem der Ansprüche 2 bis 7, wobei
der erste und der zweite Gasfluss aus einem Stickstoffgasfluss oder einem Kohlenwasserstoffgasfluss ausgewählt sind, und/oder
der erste und der zweite Gasfluss sowie die Verdünnungsmittel zurückgewonnen werden.

9. Verfahren nach einem der Ansprüche 1 bis 8, wobei
die Temperaturen des ersten und des zweiten Heizelements (116, 117) im Bereich von 60 bis 125°C liegen, und/oder
wobei das erste und das zweite Heizelement (116, 117) unter Verwendung von Wasser oder Wasserdampf erhitzt werden.

10. Verfahren nach einem der Ansprüche 2 bis 9, wobei
eine durchschnittliche kombinierte Verweilzeit des Pulvers in der ersten und zweiten Trocknungskammer (100, 101) weniger als 60 min beträgt, und/oder
der durchschnittliche Rückführungsanteil des Pulvers 5 bis 60 % des durchschnittlichen gesamten Pulverdurchsatzes entspricht.

11. Verfahren nach einem der Ansprüche 1 bis 10, wobei
die Anlage ein erstes Gitter (118) als ersten Zwischenboden umfasst, der ein hitzebeständiges Material umfasst oder daraus besteht, wobei der erste Pulverauslass (114) und der erste Gasauslass (112) oberhalb des ersten Gitters (118) angeordnet sind und der eine oder die mehreren ersten Gaseinlässe (110) unterhalb des ersten Gitters (118) in einer solchen Weise angeordnet sind, dass das erste Gitter (118) den einen oder die mehreren ersten Pulvereinlässe (104) und den ersten Pulverauslass (114) von dem einen oder den mehreren ersten Gaseinlässen (110) trennt, wobei das erste Gitter (118) ein erster Zwischenboden ist, auf dem Pulver in der ersten Kammer abgelagert wird, wobei ein erstes Gas von dem einen oder den mehreren ersten Gaseinlässen (110) durch das erste Gitter (118) hindurch in den ersten Gasauslass (112) geführt wird,
und/oder
die Anlage ein zweites Gitter (119) als zweiten Zwischenboden umfasst, der ein hitzebeständiges Material umfasst oder daraus besteht, wobei der zweite Pulverauslass (124) und der zweite Gasauslass (113) oberhalb des zweiten Gitters (119) angeordnet sind und der eine oder die mehreren zweiten Gaseinlässe (111) unterhalb des zweiten Gitters (119) in einer solchen Weise angeordnet sind, dass das zweite Gitter (119) den zweiten Pulvereinlass (114) und den zweiten Pulverauslass (124) von dem einen oder den mehreren zweiten Gaseinlässen (111) trennt, wobei das zweite Gitter (119) ein zweiter Zwischenboden ist, auf dem Pulver in der zweiten Kammer abgelagert wird, wobei ein zweites Gas von dem einen oder den mehreren zweiten Gaseinlässen (111) durch das zweite Gitter (119) hindurch in den zweiten Gasauslass (113) geführt wird.

12. Verfahren nach einem der Ansprüche 1 bis 11, wobei
die erste Kammerseitenwand (122) auch mindestens einen Teil der zweiten Kammerseitenwand bildet oder neben der zweiten Kammerseitenwand angeordnet ist, wobei die erste Kammerseitenwand (122) den ersten Pulverdurchgang (114) umfasst, und wobei der erste Pulverdurchgang (114) ein erster Durchbruch in der ersten Kammerseitenwand (122) ist.

13. Verfahren nach einem der Ansprüche 1 bis 12, wobei der Förderer (302) aus einer Gruppe bestehend aus einem Spiralförderer, einem Rohrkettenförderer und einer pneumatischen Fördervorrichtung ausgewählt ist.

14. Verfahren nach einem der Ansprüche 1 bis 13, wobei
das eine oder die mehreren ersten und zweiten Heizelemente (116, 117) vom Rohrbündeltyp oder vom Plattentyp sind und innerhalb der Kammer in einem Abstand zu der mindestens einen ersten und zweiten Kammerwand (122) angeordnet sind, oder
wobei ein oder mehrere erste Heizelemente (116) in thermischer Wirkverbindung mit der mindestens einen ersten Kammerseitenwand (122) sind oder in die mindestens eine erste Kammerseitenwand (122) integriert sind, und das eine oder die mehreren zweiten Heizelemente (117) in thermischer Wirkverbindung mit der mindestens einen zweiten Kammerseitenwand sind oder in die mindestens eine zweite Kammerseitenwand integriert sind.

15. Verfahren zur Herstellung eines Polyolefins, umfassend die Schritte:
a) kontinuierliches Polymerisieren von einem oder mehreren Olefinmonomeren in einem Verdünnungsmittel bei Temperaturen von 20°C bis 200°C und Drücken von 0,1 bis 20 MPa in Gegenwart eines Polymerisationskatalysators in einem oder mehreren Polymerisationsreaktoren,
b) Ergeben einer Suspension, die feste Polyolefinpartikel und ein Verdünnungsmittel umfasst,
c) mechanisches Trennen der Polyolefinpartikel von einem Teil des Verdünnungsmittels, was zu einer Mischung von Polyolefinpulver und Verdünnungsmittel mit einem niedrigeren Gehalt an Verdünnungsmittel als in der Aufschlämmung führt, die sich in Schritt b) ergeben hat,
d) Trocknen der Mischung von Polyolefinpulver und Verdünnungsmittel, die in Schritt c) erhalten wurde, nach dem Verfahren gemäß einem der Ansprüche 1 bis 14.

## Revendications

1. Procédé de préparation d'une poudre séchée dans une installation,
l'installation comprenant
i) une première chambre de séchage (100) pourvue d'une première section d'extrémité supérieure (106), d'une première section d'extrémité inférieure opposée (108) et d'au moins une première paroi latérale de chambre (122), la première chambre de séchage (100) étant une chambre de séchage à mélange arrière comprenant un ou plusieurs premiers éléments chauffants (116), une ou plusieurs premières entrées de poudre (104), une première sortie de poudre (114), une ou plusieurs premières entrées de gaz (110) et une première sortie de gaz (112),
ii) une deuxième chambre de séchage (101) pourvue d'une deuxième section d'extrémité supérieure (107), d'une deuxième section d'extrémité inférieure opposée (109) et d'au moins une deuxième paroi latérale de chambre, la deuxième chambre de séchage (101) comprenant un ou plusieurs deuxièmes éléments chauffants (117), une deuxième entrée de poudre (114), une deuxième sortie de poudre (124), une ou plusieurs deuxièmes entrées de gaz (111) et une deuxième sortie de gaz (113),
iii) un premier passage de poudre (114) pour le transfert de poudre à partir de la première chambre de séchage (100) dans la deuxième chambre de séchage (101), qui est réalisé au moyen de la première sortie de poudre (114) qui est reliée à la deuxième entrée de poudre (114) ou identique à celle-ci,
iv) un dispositif de transport (302) et éventuellement un deuxième passage de poudre (120) pour le transfert de poudre à partir de la deuxième chambre de séchage (101) dans la première chambre de séchage (100),
un mélange de poudre et de diluant, possédant une première concentration moyenne en poids de diluant, étant introduit à travers ladite une ou lesdites plusieurs premières entrées de poudre (104) dans la première chambre de séchage (100) et une poudre préséchée, possédant une deuxième concentration moyenne en poids de diluant, étant transférée à partir de la première chambre de séchage (100) dans la deuxième chambre de séchage (101) à travers le premier passage de poudre (114),
le diluant étant pour la majeure partie ou entièrement retiré du mélange de poudre et de diluant après le passage à travers la première et la deuxième chambre de séchage (100, 101) formant ainsi, dans la deuxième chambre de séchage (101), une poudre séchée, possédant une troisième concentration moyenne en poids de diluant,
la première concentration moyenne en diluant étant supérieure à la deuxième concentration moyenne en diluant et la deuxième concentration moyenne en diluant étant supérieure à la troisième concentration moyenne en diluant,
une partie de recirculation de la poudre séchée étant transférée à partir de la deuxième chambre de séchage (101) dans la première chambre de séchage (100) à l'aide du dispositif de transport (302) et éventuellement du deuxième passage de poudre (120) et
une partie d'évacuation de la poudre séchée étant évacuée à partir de la deuxième chambre de séchage (101).

2. Procédé selon la revendication 1, comprenant les étapes suivantes :
a) introduction du mélange de poudre et de diluant à travers ladite une ou lesdites plusieurs premières entrées de poudre (104) dans la première chambre de séchage (100),
b) chauffage du mélange de poudre et de diluant par ledit un ou les plusieurs premiers éléments chauffants (116) à une première température dans un premier flux de gaz introduit à travers ladite une ou lesdites plusieurs premières entrées de gaz (110) et évacué à travers la première sortie de gaz (112), formant ainsi la poudre préséchée,
c) transfert de la poudre préséchée à travers le premier passage de poudre (114) dans la deuxième chambre de séchage (101),
d) chauffage de la poudre préséchée par ledit un ou lesdits plusieurs deuxièmes éléments chauffants (117) à une deuxième température dans un deuxième flux de gaz introduit à travers ladite une ou lesdites plusieurs deuxièmes entrées de gaz (111) et évacué à travers la deuxième sortie de gaz (113), formant ainsi la poudre séchée,
e) transfert de la partie de recirculation de la poudre séchée à travers le dispositif de transport (302) et facultativement à travers le deuxième passage de poudre (120) à partir de la deuxième chambre de séchage (101) dans la première chambre de séchage (100) et évacuation d'une partie d'évacuation de la poudre séchée à travers la deuxième sortie de poudre (124) à partir de la deuxième chambre de séchage (101).

3. Procédé selon la revendication 2,
la première concentration moyenne en diluant dans le mélange de poudre et de diluant étant supérieure à la deuxième concentration moyenne en diluant dans la poudre préséchée et la deuxième concentration moyenne en diluant dans la poudre préséchée étant supérieure à la troisième concentration moyenne en diluant dans la poudre séchée et/ou
la première concentration moyenne en diluant dans le mélange de poudre et de diluant étant dans la plage allant de 15% en poids à 50% en poids et la troisième concentration moyenne en diluant dans la poudre séchée étant inférieure à 10% en poids.

4. Procédé selon l'une quelconque des revendications 1 à 3,
la poudre étant une poudre polymère.

5. Procédé selon la revendication 4,
la poudre étant une poudre de polyoléfine.

6. Procédé selon la revendication 5,
le mélange de poudre et de diluant étant un mélange de polyéthylène et d'un diluant hydrocarboné.

7. Procédé selon la revendication 6,
la polyoléfine étant une polyoléfine bimodale ou multimodale.

8. Procédé selon l'une quelconque des revendications 2 à 7,
le premier et le deuxième flux de gaz étant choisis parmi un flux de gaz d'azote ou un flux de gaz hydrocarboné et/ou
le premier et le deuxième flux de gaz ainsi que les diluants étant recyclés.

9. Procédé selon l'une quelconque des revendications 1 à 8,
les températures du premier et du deuxième élément chauffant (116, 117) étant situées dans la plage allant de 60 à 125°C et/ou
le premier et le deuxième élément chauffant (116, 117) étant chauffés à l'aide d'eau ou de vapeur.

10. Procédé selon l'une quelconque des revendications 2 à 9,
un temps de séjour combiné moyen de poudre dans la première et la deuxième chambre de séchage (100, 101) étant inférieur à 60 min et/ou
la partie de recirculation moyenne de poudre correspondant à 5 à 60% du débit total moyen de poudre.

11. Procédé selon l'une quelconque des revendications 1 à 10,
l'installation comprenant une première grille (118) en tant que premier plancher intermédiaire, comprenant ou constitué par un matériau résistant à la chaleur, la première sortie de poudre (114) et la première sortie de gaz (112) étant disposées au-dessus de la première grille (118) et ladite une ou lesdites plusieurs premières entrées de gaz (110) étant disposées au-dessous de la première grille (118) de telle sorte que la première grille (118) sépare ladite une ou lesdites plusieurs premières entrées de poudre (104) et la première sortie de poudre (114) par rapport à ladite une ou lesdites plusieurs premières entrées de gaz (110), la première grille (118) étant un premier plancher intermédiaire sur lequel de la poudre est déposée dans la première chambre, un premier gaz étant conduit à partir de ladite une ou desdites plusieurs premières entrées de gaz (110) à travers la première grille (118) dans la première sortie de gaz (112),
et/ou
l'installation comprenant une deuxième grille (119) en tant que deuxième plancher intermédiaire comprenant ou constitué par un matériau résistant à la chaleur, la deuxième sortie de poudre (124) et la deuxième sortie de gaz (113) étant disposées au-dessus de la deuxième grille (119) et ladite une ou lesdites plusieurs deuxièmes entrées de gaz (111) étant disposées au-dessous de la deuxième grille (119) de telle sorte que la deuxième grille (119) sépare la deuxième entrée de poudre (114) et la deuxième sortie de poudre (124) par rapport à ladite une ou lesdites plusieurs deuxièmes entrées de gaz (111), la deuxième grille (119) étant un deuxième plancher intermédiaire sur lequel de la poudre est déposée dans la deuxième chambre, un deuxième gaz étant conduit à partir de ladite une ou desdites deuxièmes entrées de gaz (111) à travers la deuxième grille (119) dans la deuxième sortie de gaz (113).

12. Procédé selon l'une quelconque des revendications 1 à 11,
la première paroi latérale de chambre (122) constituant également au moins une section de la deuxième paroi latérale de chambre ou étant disposée à côté de la deuxième paroi latérale de chambre, ladite première paroi latérale de chambre (122) comprenant le premier passage de poudre (114) et ledit premier passage de poudre (114) étant une première ouverture dans la première paroi latérale de chambre (122).

13. Procédé selon l'une quelconque des revendications 1 à 12,
le transporteur (302) étant choisi dans un groupe constitué par un transporteur en spirale, un transporteur à chaîne tubulaire et un dispositif de transport pneumatique.

14. Procédé selon l'une quelconque des revendications 1 à 13,
ledit un ou lesdits plusieurs premier et deuxième éléments chauffants (116, 117) étant du type faisceau tubulaire ou du type plaque et étant disposés à l'intérieur de la chambre à une certaine distance de ladite une ou desdites plusieurs première et deuxième parois de chambre (122) ou
un ou plusieurs premiers éléments chauffants (116) étant en liaison fonctionnelle thermique avec ladite au moins une première paroi latérale de chambre (122) ou intégrés dans ladite au moins une première paroi latérale de chambre (122) et ledit un ou lesdits plusieurs deuxièmes éléments chauffants (117) étant en liaison fonctionnelle thermique avec ladite au moins une deuxième paroi latérale de chambre ou intégrés dans ladite au moins une deuxième paroi latérale de chambre.

15. Procédé de préparation d'une polyoléfine comprenant les étapes de
a) polymérisation en continu d'un ou plusieurs monomères oléfiniques dans un diluant à des températures allant de 20°C à 200°C et à des pressions de 0,1 à 20 MPa en présence d'un catalyseur de polymérisation dans un ou plusieurs réacteurs de polymérisation,
b) obtention d'une suspension comprenant des particules de polyoléfine solides et un diluant,
c) séparation mécanique des particules de polyoléfine d'une partie du diluant, conduisant ainsi à un mélange de poudre de polyoléfine et de diluant possédant une teneur en diluant inférieure à celle de la suspension obtenue à l'étape b),
d) séchage du mélange de poudre de polyoléfine et de diluant obtenu à l'étape c) par le procédé selon l'une quelconque des revendications 1 à 14.
